# EUROPÄISCHE PATENTSCHRIFT

(11) **EP 1 158 591 B1**
(45) Veröffentlichungstag und Bekanntmachung des Hinweises auf die Patenterteilung: **23.08.2006**
(21) Anmeldenummer: 01111392.5
(22) Anmeldetag: 10.05.2001
(51) Int. Cl.: H01M 8/06, C01B 3/38

(54) **Verfahren zum Betreiben einer Gaserzeugungsvorrichtung in einem Brennstoffzellensystem**
Method for operating a gas generating device for a fuel cell
Méthode de fonctionnement d'une unité de génération de gas pour cellule à combustible

(30) Priorität: 24.05.2000 DE 10025667
(43) Veröffentlichungstag der Anmeldung: 28.11.2001
(73) Patentinhaber: NuCellSys GmbH, 73230 Kirchheim/Teck-Nabern (DE)
(72) Erfinder: Boneberg, Stefan, 72660 Beuren (DE); Schüssler, Martin Dr., 89073 Ulm (DE); Walz, Hans-Frieder, 73337 Bad Überkingen (DE)
(74) Vertreter: Finkele, Rolf

(56) Entgegenhaltungen:
- EP-A- 0 968 958
- US-A- 5 733 347
- US-A- 5 928 614

## Beschreibung

Die Erfindung betrifft ein Verfahren zum Betreiben einer Gaserzeugungsvorrichtung in einem Brennstoffzellensystem gemäß den Merkmalen im Oberbegriff des Patentanspruchs 1.

Zum Starten der Wasserstofferzeugung werden Gaserzeugungsvorrichtungen auf unterschiedliche Weise gestartet. Aus der WO 96/00186 A1 sind beispielsweise autotherme beziehungsweise partielle Oxidationsreaktoren bekannt, die über eine exotherme Reaktion im Inneren der Reaktoren gestartet werden.

Weiterhin sind Reaktoren (zum Beispiel aus der DE 33 45 958 A1) zur Wasserdampfreformierung bekannt, die über eine exotherme Reaktion in einem thermisch angekoppelten Bereich und/oder durch die Einleitung eines heißen Wärmeträgergases aufgeheizt werden.

Solche Reaktoren weisen jedoch große thermische Massen auf und benötigen daher sehr lange, um auf eine vorgegebene Betriebstemperatur erhitzt zu werden. Zur Vermeidung dieses Nachteils ist aus der gattungsgemäßen EP 0 968 958 A1 bereits ein mehrstufiger Reformer bekannt, der zumindest eine Teileinheit mit gegenüber den anderen Teileinheiten verringerter thermischer Masse aufweist.

Aufgabe der Erfindung ist es, ein verbessertes Verfahren zum Betreiben einer Gaserzeugungsvorrichtung in einem Brennstoffzellensystem, insbesondere mit verbesserten Kaltstarteigenschaften zu schaffen.

Diese Aufgabe wird durch den Gegenstand des Anspruches 1 gelöst. Vorteilhafte Ausführungen sind Gegenstand weiterer Ansprüche.

Erfindungsgemäß sind in einem Gaserzeugungsvorrichtung mindestens zwei seriell von einem Eduktstrom durchströmte Gaserzeugungseinheiten vorgesehen, wobei die erste Gaserzeugungseinheit eine gegenüber der zweiten Gaserzeugungseinheit geringere thermische Masse aufweist. Weiterhin wird während einer Startphase nur die erste Gaserzeugungseinheit betrieben, wobei die erste Gaserzeugungseinheit mit einer Leistung und/oder mit einer Temperatur betrieben wird, die über den Werten im Normalbetrieb der Gaserzeugungsvorrichtung liegen. Nach Beendigung der Startphase wird dann zumindest die zweite Gaserzeugungseinheit betrieben.

Für den Kaltstart wird also nur eine Teileinheit der gesamten Gaserzeugungsvorrichtung benutzt. Das heißt, der Wasserstoff unmittelbar nach dem Start wird in einer thermisch getrennten Einheit erzeugt, während der übrige wasserstofferzeugende Bereich noch kalt ist. Damit verringert sich die aufzuwärmende Masse drastisch.

Durch die geringe thermische Masse und den Überlastbetrieb der ersten Gaserzeugungseinheit während der Startphase wird die Kaltstartfähigkeit der Gaserzeugungsvorrichtung verkürzt. Insbesondere in mobilen Anwendungen im Fahrzeugbereich muß der Kaltstart sehr schnell verlaufen. Außerdem wird durch die verringerter thermische Masse bei katalytisch beheizten Systemen die während der Startphase benötigte Sauerstoffmenge reduziert.

Durch die Möglichkeit, die erste Gaserzeugungseinheit neben der Startphase nur noch im Vollastbereich einzusetzen weist den Vorteil auf, daß die durch den Überlastbetrieb während der Startphase eingeschränkte Lebensdauer der ersten Gaserzeugungseinheit durch die Abschaltung oder die reduzierte Belastung in Teillastphasen ausgeglichen wird, so daß insgesamt ein Brennstoffzellensystem mit ausreichender Lebensdauer bereitgestellt werden kann.

Die Möglichkeit, die erste Gaserzeugungseinheit auch im Teillastbereich bei starken Lastwechseln zu betrieben weist den Vorteil auf, daß in kurzer Zeit eine ausreichende Wasserstoffmenge bereitgestellt und somit die Dynamik des Systems verbessert werden kann. Durch die geringe thermische Masse der ersten Gaserzeugungseinheit ist es außerdem möglich, diese bei Bedarf durch geeignete Mittel warm zu halten, daß heißt auf einer zwischen Umgebungs- und Betriebstemperatur liegenden Temperatur. Dadurch läßt sich die Kaltstartzeit weiter verkürzen.

Weitere Vorteile gehen aus den Unteransprüchen und der Beschreibung hervor. Die Erfindung wird nun anhand der beigefügten Zeichnung näher beschrieben. In dieser zeigt
- Fig. 1a: ein vereinfachtes Blockschaltbild eines ersten Ausführungsbeispiels eines Brennstoffzellensystems während der Startphase,
- Fig. 1b: das Brennstoffzellensystem gemäß Fig. 1a während dem Normalbetrieb,
- Fig. 2a: ein vereinfachtes Blockschaltbild eines zweiten Ausführungsbeispiels eines Brennstoffzellensystems während der Startphase,
- Fig. 2b: das Brennstoffzellensystem gemäß Fig. 2a während dem Normalbetrieb.

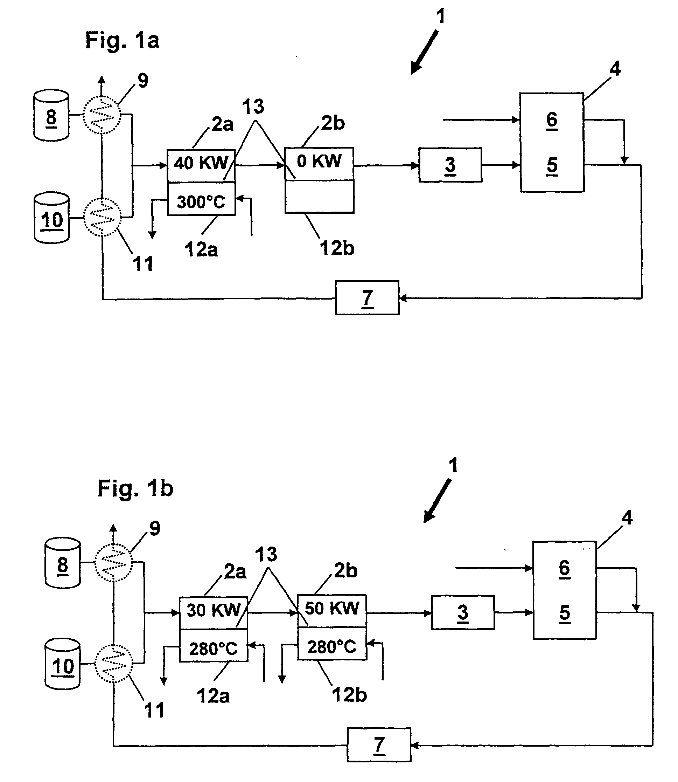

Das insgesamt mit **1** bezeichnete Brennstoffzellensystem gemäß den Fig. **1a, 1b** weist eine zweistufige Gaserzeugungseinheit **2a, 2b,** eine Gasreinigungseinheit **3,** eine Brennstoffzelle **4** mit einem Anodenraum **5** und einem Kathodenraum **6** und eine Abgasnachbehandlungseinheit **7** auf. In der Gaserzeugungseinheit **2a, 2b** wird aus einem Brennstoff mittels Wasserdampfreformierung ein wasserstoffreiches Gas erzeugt. Da die Wasserdampfreformierung endotherm ist, das heißt mit Energie versorgt werden muß, sind in beiden Gaserzeugungseinheiten **2a, 2b** entsprechende Temperierräume **12a, 12b** vorgesehen. Die Temperierräume **12a, 12b** sind über wärmeleitende Trennwände **13** mit den eigentlichen Reaktionsräumen der entsprechenden Gaserzeugungseinheiten **2a, 2b** verbunden. Die Temperierräume **12a, 12b** können von einem geeigneten Wärmeträgermedium, beispielsweise ein Thermoöl, durchströmt werden. Alternativ ist es auch möglich, in den Temperierräumen **12a, 12b** geeignete Brennereinheiten vorzusehen. Vorzugsweise handelt es sich hierbei um katalytische Brennereinheiten, in denen brennbare Bestandteile eines die Temperierräume **12a, 12b** durchströmenden Gases mittels eines sauerstoffhaltigen Mediums oxidiert werden. Im Ausführungsbeispiel werden die Temperierräume **12a, 12b** unabhängig voneinander jeweils im Gegenstrom zum Brenngas durchströmt. Möglich ist es jedoch auch, zumindest einen der beiden Temperierrräume **12a, 12b** im Gleichstrom zu durchströmen. Außerdem ist es auch möglich, beide Temperierräume **12a, 12b** nacheinander zu durchströmen.

In diesem wasserstoffreichen Gas ist üblicherweise auch Kohlenmonoxid enthalten, welches für die im Anodenraum **5** der Brennstoffzelle **4** vorhandenen Katalysatoren schädlich wirkt. Aus diesem Grund ist zwischen der Gaserzeugungseinheit **2** und dem Anodenraum **5** der Brennstoffzelle **4** eine Gasreinigungseinheit **3** vorgesehen. Hierbei handelt es sich vorzugsweise um eine Vorrichtung zur selektiven katalytischen Oxidation des Kohlenmonoxids unter Zugabe von Sauerstoff. Es können jedoch auch andere geeignete Gasreinigungseinheiten **3,** beispielsweise eine Membranreinigungseinheit, verwendet werden. Falls eine Vorrichtung zur selektiven katalytischen Oxidation des Kohlenmonoxids eingesetzt wird, kann diese auch zur Bereitstellung der benötigtem thermischen Energie als Brenner direkt in einen oder beide Temperierräume **12a, 12b** der Gaserzeugungseinheiten **2a, 2b** integriert werden.

Nach dem Durchströmen der Brennstoffzelle **4** wird das Anodenabgas mit der Abluft aus dem Kathodenraum **6** gemischt und der Abgasnachbehandlungseinheit **7** zugeführt. Dort werden an einem geeigneten Katalysator, vorzugsweise einem Edelmetallkatalysator, alle brennbaren Bestandteile der Brennstoffzellenabgase möglichst vollständig umgesetzt. Anstelle des Kathodenabgases kann auch ein anderes sauerstoffhaltiges Gas stromauf der Abgasnachbehandlungseinheit **7** dem Anodenabgas beigemischt werden.

Der Brennstoff wird aus einem Brennstofftank **8** in die Gaserzeugungseinheit **2** geführt. In dem Brennstofftank **8** werden vorzugsweise flüssige Brennstoffe mitgeführt. Alternativ können aber auch gasförmige Brennstoffe verwendet werden, wobei dann der Brennstofftank **8** als Druck- oder Flüssiggasspeicher ausgebildet ist. Bei der Verwendung eines flüssigen Brennstoffes wird üblicherweise zusätzlich eine Verdampfereinheit **9** vorgesehen, die den flüssigen Brennstoff vor dem Eintritt in die Gaserzeugungseinheit **2a, 2b** in die gasförmige Phase überführt. Weiterhin ist ein Wassertank **10** vorgesehen. Das Wasser wird in einer separaten Verdampfereinheit **11** verdampft und der Wasserdampf anschließend dem gasförmigen Brennstoff vor dem Eintritt in die Gaserzeugungseinheit **2a, 2b** beigemischt. Alternativ ist es auch möglich, flüssigen Brennstoff und Wasser zu mischen und anschließend in einer einzigen gemeinsamen Verdampfereinheit zu verdampfen.

In dem gezeigten Ausführungsbeispiel werden die Verdampfereinheiten **9, 11** durch die heißen Abgase der Abgasnachbehandlungseinheit **7** beheizt. Alternativ ist es jedoch auch möglich, die Verdampfereinheiten **9, 11** durch ein anderes Wärmeträgermedium zu beheizen. Möglich ist es auch, die Abgasnachbehandlungseinheit **7** ganz oder teilweise in die Verdampfereinheiten **9, 11** zu integrieren.

Die Betriebsweise des dargestellten Brennstoffzellensystems **1** wird im folgenden anhand eines Ausführungsbeispiels erläutert, wobei die Fig. **1a** den Betrieb während einer Startphase und Fig. **1b** den Normalbetrieb, das heißt den Betrieb nach Beendigung der Startphase zeigt. Die Gaserzeugungseinheiten **2a, 2b** haben in dem gezeigten Beispiel eine Gesamt-Nennleistung P_{nenn_ges} = P_{nenn_1} + P_{nenen_2} von 80 KW. Das heißt, die Gaserzeugungseinheiten **2a, 2b** können im Dauerbetrieb bei Vollast soviel Wasserstoff erzeugen, wie das Brennstoffzelle **4** zur Erzeugung von 80 KW elektrischer Leistung benötigt. Im Normalbetrieb gemäß Fig. 1b trägt die erste Gaserzeugungseinheit **2a** eine Nennleistung **P**_{**nenn_1**} = 30 KW bei, während die zweite Gaserzeugungseinheit **2b** die restliche Nennleistung **P**_{**nenn_2**} = 50 KW beiträgt. Soll das Brennstoffzellensystem **1** im dynamischen Betrieb weniger elektrische Leistung bereitstellen, so werden den Gaserzeugungseinheiten **2a, 2b** entsprechend weniger Brennmittel zugeführt, so daß auch entsprechend weniger Wasserstoff erzeugt wird. Im Normalbetrieb werden die beiden Gaserzeugungseinheiten **2a, 2b** auf vorgegebenen Betriebstemperaturen **T**_{**nenn_1**}**, T**_{**nenn_2**} gehalten, beispielsweise **T**_{**nenn_1**} **= T**_{**nenn_2**} **=** 280°C

Erfindungsgemäß sind die beiden Gaserzeugungseinheiten **2a, 2b** so ausgeführt, daß die erste Gaserzeugungseinheit **2a** gegenüber der zweiten Gaserzeugungseinheit **2b** eine geringere thermische Masse aufweist. Gleichzeitig wird während der Startphase nur die erste Gaserzeugungseinheit **2a** betrieben. Da diese eine geringere thermische Masse besitzt kann sie bei einem Startvorgang schneller auf eine notwendige Betriebstemperatur gebracht werden. Dies kann auf unterschiedlichen Art und Weise erfolgen. Entweder direkt durch eine katalytische Reaktion in der Gaserzeugungseinheit **2a** oder über eine indirekte Beheizung mittels eines Brenners, Wärmeträgers oder auch einer elektrischen Beheizung. Alternativ kann die erste Gaserzeugungseinheit **2a** jedoch auch während Betriebspausen auf einer Mindesttemperatur gehalten werden, was durch die geringere thermische Masse ebenfalls vereinfacht wird.

Ein weiterer Aspekt der Erfindung besteht darin, daß die erste Gaserzeugungseinheit **2a** während der Startphase mit einer Leistung **P**_{**start_1**} > **P**_{**nenn_1**} und/oder mit einer Betriebstemperatur **T**_{**start_1**} > **T**_{**nenn_1**} betrieben wird. Durch die erhöhte Betriebstemperatur **T**_{**start_1**}**,** beispielsweise **T**_{**start_1**} = 300°C, werden die stromab liegenden und von dem heißen Produktgasstrom der ersten Gaserzeugungseinheit **2a** durchströmten Komponenten, insbesondere die zweite Gaserzeugungseinheit **2b,** schneller erwärmt. Gleichzeitig kann die erste Gaserzeugungseinheit **2a** durch die erhöhte Betriebstemperatur **T**_{**start_1**} in Überlast, beispielsweise mit **P**_{**start_1**} = 40 KW, betrieben werden. Obwohl während der Startphase also nur die erste Gaserzeugungseinheit **2a** betrieben wird kann dennoch bereits eine maximale Leistung von 40 KW zur Verfügung gestellt werden. Dies hat zwar zur Folge, daß sich die Lebensdauer der ersten Gaserzeugungseinheit **2a** verringert. Auf der anderen Seite kann dadurch jedoch eine verbesserte Kaltstartfähigkeit gewährleistet werden.

Obwohl während der Startphase nur die erste Gaserzeugungseinheit **2a** betrieben wird, wird die zweite Gaserzeugungseinheit **2b** jedoch nicht vom Produktgasstrom abgetrennt. Vielmehr erfolgt die Abschaltung der zweiten Gaserzeugungseinheit **2b** dadurch, daß während der Startphase nur soviel Brennmittel zugeführt wird, wie in der ersten Gaserzeugungseinheit **2a** auch umgesetzt werden kann. Somit wird die zweite Gaserzeugungseinheit **2b** von einem im wesentlichen vollständig umgesetzten Brennmittelstrom durchströmt, so daß die zweite Gaserzeugungseinheit **2b** im wesentlichen keinen Beitrag (**P**_{**start_2**} = 0 KW) zur Gesamt-Nennleistung beiträgt. In Fig. **1a** ist für die zweite Gaserzeugungseinheit **2b** keine Betriebstemperatur **T**_{**nenn_2**} angegeben, da sie im allgemeinen nicht von außen beheizt wird und somit auch keine definierte Betriebstemperatur aufweist. Die zweite Gaserzeugungseinheit **2b** erfährt vielmehr nur eine direkte Beheizung durch den heißen Produktgasstrom aus der ersten Gaserzeugungseinheit **2a,** so daß sich eine allmählich ansteigende Temperatur einstellt. Steht in dem Brennstoffzellensystem 1 während der Startphase jedoch bereits genügend thermische oder elektrische Energie zur Verfügung, so kann auch die zweite Gaserzeugungseinheit **2b** bereits während der Startphase direkt oder indirekt beheizt werden.

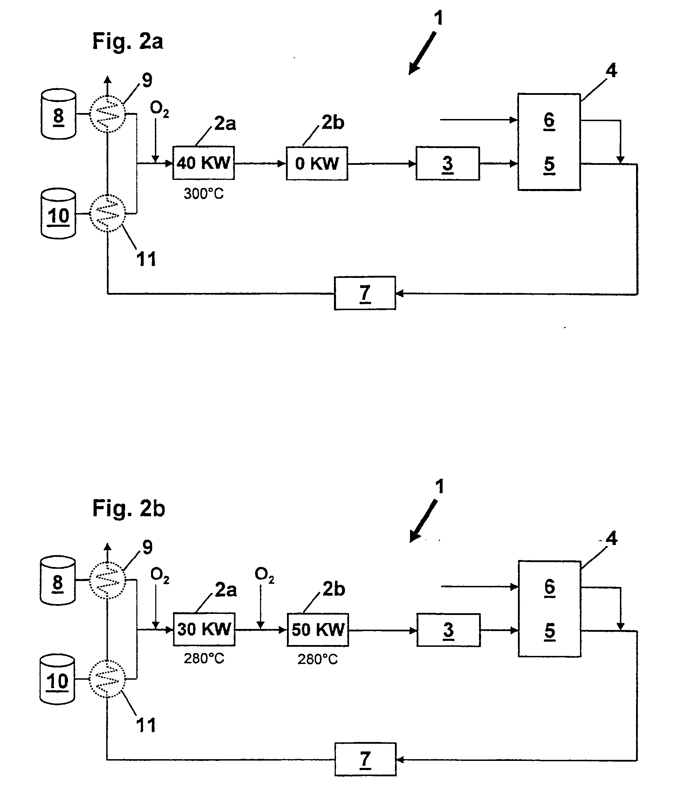

Ein zweites Ausführungsbeispiel zeigen die Fig. **2a, 2b,** wobei wiederum die Fig. **2a** die Startphase und die Fig. **2b** den Normalbetrieb des Brennstoffzellensystems zeigt und wobei gleiche Teile gegenüber den Fig. **1a, 1b** mit übereinstimmenden Bezugszeichen gekennzeichnet sind. Abweichend vom ersten Ausführungsbeispiel werden die beiden Gaserzeugungseinheiten **2a, 2b** in einer an sich bekannten, autothermen Betriebsweise betrieben. Das heißt, die endotherme Wasserdampfreformierung wird so mit einer exothermen, partiellen Oxidation kombiniert, daß die Gaserzeugungseinheiten **2a, 2b** insgesamt autotherm gefahren werden. Temperierräume sind in diesem Falle nicht vorgesehen. Ein für die partielle Oxidation benötigtes sauerstoffhaltiges Medium wird stromauf den Gaserzeugungseinheiten **2a, 2b** zugeführt. Die zugeführte Menge an sauerstoffhaltigem Medium bestimmt die Oxidationsrate in den Gaserzeugungseinheiten **2a, 2b** und somit auch die jeweilige Betriebstemperatur. Bevorzugt wird Luft als sauerstoffhaltiges Medium eingesetzt. Obwohl im folgenden nur noch von Sauerstoff die Rede sein wird, können selbstverständlich beliebige sauerstoffhaltige Medien eingesetzt werden.

In der Startphase (Fig. **2a**) wird wiederum nur soviel Brennmittel zugeführt, wie in der ersten Gaserzeugungseinheit **2a** umgesetzt werden kann. Gleichzeitig wird nur in die erste Gaserzeugungseinheit **2a** Sauerstoff zugeführt. Die Sauerstoffmenge wird während der Startphase so eingestellt, daß sich eine erhöhte Betriebstemperatur **T**_{**nenn_1**} = 300°C einstellt. Wie bereits weiter oben erläutert wird die erste Gaserzeugungseinheit **2a** während der Startphase in Überlast betrieben, daß heißt im dargestellten Beispiel bei einer Nennleistung **P**_{**start_1**} = 40 KW. Da das Brennmittel in der ersten Gaserzeugungseinheit **2a** im wesentlichen vollständig umgesetzt wird und auch kein zusätzlicher Sauerstoff zugegeben wird, ist in der zweiten Gaserzeugungseinheit **2b** im wesentlichen mit keinem Umsatz zu rechnen, so daß diese wiederum im wesentlichen keinen Beitrag (**P**_{**start_2**} = 0 KW) zur Gesamt-Nennleistung beiträgt. Die zweite Gaserzeugungseinheit **2b** wird jedoch wiederum zumindest durch den heißen Produktgasstrom aus der ersten Gaserzeugungseinheit **2a** erwärmt.

Nach Beendigung der Startphase wird die zugeführte Sauerstoffmenge derart reduziert, daß sich in der ersten Gaserzeugungseinheit **2a** eine im Vergleich zur Startphase reduzierte Betriebstemperatur **T**_{**nenn_1**} = 280°C einstellt. Gleichzeitig wird auch stromauf der zweiten Gaserzeugungseinheit **2b** Sauerstoff zugegeben. Und zwar in einer Menge, daß sich auch in der zweiten Gaserzeugungseinheit **2b** eine Betriebstemperatur **T**_{**nenn_2**} = 280°C einstellt.

Die genannten Zahlenwerte für die Nennleistungen beziehungsweise Betriebstemperaturen sind nur Ausführungsbeispiele und können selbstverständlich an die Gegebenheiten angepaßt werden, ohne den Bereich der erfindungsgemäßen Lösung zu Verlassen. Weiterhin können beliebige Gaserzeugungseinheiten **2a, 2b** verwendet werden, insbesondere neben der bereits beschriebenen Wasserdampfreformierung und der autothermen Betriebsweise auch eine partielle Oxidationsstufe, wobei die Gaserzeugungseinheiten auch abweichend von den Ausführungsbeispielen geeignet kombiniert werden können.

In einer bevorzugten Ausführungsform wird die erste Gaserzeugungseinheit **2a** nur während der Startphase und während Betriebsphasen, in denen eine die Nennleistung **P**_{**nenn_2**} der zweiten Gaserzeugungseinheit **2b** übersteigende Lastanforderung vorliegt, eingesetzt. Im Teillastbetrieb wird dagegen im wesentlichen die gesamte Leistung durch die zweite Gaserzeugungseinheit **2b** bereitgestellt. Hierzu kann beispielsweise im Teillastbereich die Sauerstoffzufuhr zur ersten Gaserzeugungseinheit 2a reduziert oder ganz eingestellt werden.

In einem weiteren Ausführungsbeispiel kann die erste Gaserzeugungseinheit **2a** auch bei starken Lastwechseln aktiviert werden, um in möglichst kurzer Zeit eine ausreichende Wasserstoffmenge zur Verfügung zu stellen. Hierzu wird beispielsweise bei Lastwechsel kurzzeitig eine vorgegebene Sauerstoffmenge in die erste Gaserzeugungseinheit **2a** gegeben.

Der Einsatz der ersten Gaserzeugungseinheit **2a** nur während der Startphase und zusätzlich noch im Vollastbereich und/oder bei starken Lastwechseln weist den Vorteil auf, daß sich die Lebensdauer der ersten Gaserzeugungseinheit **2a** insgesamt wieder erhöht, weil die aufgrund des Überlastbetriebs während der Startphase reduzierte Lebensdauer durch die Abschaltung oder zumindest reduzierte Belastung während der Teillastphasen wieder erhöht wird. Somit kann ein Brennstoffzellensystem geschaffen werden, in dem beide Gaserzeugungseinheiten **2a, 2b** trotz der verkürzten Startphase eine einheitliche und ausreichende Lebensdauer aufweisen.

## Patentansprüche

1. Verfahren zum Betreiben einer Gaserzeugungsvorrichtung in einem Brennstoffzellensystem (**1**) mit mindestens zwei seriell von einem Eduktstrom durchströmten Gaserzeugungseinheiten (**2a, 2b**) mit einer ersten und zweiten Nennleistung (**P**_{**nenn_1**}**, P**_{**nenn_2**}) und einer ersten und zweiten vorgegebenen Betriebstemperatur (**T**_{**nenn_1**}**, T**_{**nenn_2**}), wobei die erste Gaserzeugungseinheit (**2a**) eine gegenüber der zweiten Gaserzeugungseinheit (**2b**) geringere thermische Masse aufweist,
**dadurch gekennzeichnet,**
**daß** während einer Startphase nur die erste Gaserzeugungseinheit (**2a**) betrieben wird, wobei die erste Gaserzeugungseinheit (**2a**) mit einer Leistung **P**_{**start_1**} > **P**_{**nenn_1**} und/oder mit einer Betriebstemperatur **T**_{**start_1**} > **T**_{**nenn_1**} betrieben wird, und nach Beendigung der Startphase zumindest die zweite Gaserzeugungseinheit (**2b**) betrieben wird.

2. Verfahren nach Anspruch 1
**dadurch gekennzeichnet,**
**daß** nach Beendigung der Startphase bei geringer und mittlerer Last nur die zweite Gaserzeugungseinheit (**2b**) betrieben wird und daß die erste Gaserzeugungseinheit (**2a**) nur dann zusätzlich betrieben wird, wenn eine die Nennleistung **P**_{**nenn_2**} der zweiten Gaserzeugungseinheit (**2b**) übersteigende Leistung benötigt wird.

3. Verfahren nach Anspruch 1
**dadurch gekennzeichnet,**
**daß** die Gaserzeugungseinheiten (**2a, 2b**) indirekt beheizt und für eine endotherme Wasserdampfreformierung geeignet sind, wobei die erste Gaserzeugungseinheit (**2a**) während der Startphase bei einer Temperatur **T**_{**start**_**1**} **> T**_{**nenn_1**} betrieben und maximal eine der momentan angeforderten Leistung entsprechende Brennmittelmenge zugeführt wird, und daß nach Beendigung der Startphase die Gaserzeugungseinheiten (**2a, 2b**) auf vorgegebenen Betriebstemperaturen (**T**_{**nenn_1**}**, T**_{**nenn_2**}) betrieben werden.

4. Verfahren nach Anspruch 1,
**dadurch gekennzeichnet,**
**daß** zumindest der ersten Gaserzeugungseinheit (**2a**) während der Startphase neben dem Brennmittel auch ein sauerstoffhaltiges Medium zugeführt wird, wobei zumindest die erste Gaserzeugungseinheit (**2a**) zur partiellen Oxidation oder für eine autotherme Betriebsweise geeignet ist, und wobei während der Startphase maximal eine der Leistung **P**_{**start_1**} entsprechende Brennmittelmenge beziehungsweise Menge an sauerstoffhaltigem Medium zugeführt wird.

5. Verfahren nach Anspruch 3,
**dadurch gekennzeichnet,**
**daß** der ersten Gaserzeugungseinheit (**2a**) nach der Beendigung der Startphase keine oder nur eine Menge an sauerstoffhaltigem Medium zugeführt wird, die gegenüber der während der Startphase maximal erreichten Menge reduziert ist.

6. Verfahren nach Anspruch 4,
**dadurch gekennzeichnet,**
**daß** der ersten Gaserzeugungseinheit (**2a**) nach der Beendigung der Startphase bei einem vorgegebenen Lastsprung für eine vorgegebene Zeitdauer sauerstoffhaltiges Medium zugeführt wird.

7. Verfahren nach Anspruch 2 und 4,
**dadurch gekennzeichnet,**
**daß** der ersten Gaserzeugungseinheit (**2a**) nach der Beendigung der Startphase dann sauerstoffhaltiges Medium zugeführt wird, wenn eine die Nennleistung **P**_{**nenn_2**} der zweiten Gaserzeugungseinheit (**2b**) übersteigende Leistung angefordert wird.

8. Verfahren nach Anspruch 1,
**dadurch gekennzeichnet,**
**daß** Mittel zum Warmhalten der ersten Gaserzeugungseinheit (**2a**) vorgesehen sind.

9. Verfahren nach Anspruch 1,
**dadurch gekennzeichnet,**
**daß** die Startphase beendete ist, sobald die vom Produktgasstrom der ersten Gaserzeugungseinheit (**2a**) durchströmten Komponenten des Brennstoffzellensystems (**1**) ihre vorgegebene Betriebstemperatur erreicht haben.

## Claims

1. Method for operating a gas generation device in a fuel cell system (1) having at least two gas generation units (2a, 2b) through which a starting-material stream flows in series and which have a first and second rated power (P_{rated_1}, P_{rated_2}) and a first and second predetermined operating temperature (T_{rated_1}, T_{rated_2}), the first gas generation unit (2a) having a lower thermal mass than the second gas generation unit (2b), **characterized in that** during a starting phase only the first gas generation unit (2a) is operated, the first gas generation unit (2a) being operated with a power P_{start_1} > P_{rated_1} and/or at an operating temperature T_{start_1} > T_{start_1}, and after the end of the starting phase at least the second gas generation unit (2b) is operated.

2. Method according to Claim 1, **characterized in that**, after the starting phase has ended, in the event of a low and medium load only the second gas generation unit (2b) is operated, and **in that** the first gas generation unit (2a) is only additionally operated when a power which exceeds the rated power P_{rated_2} of the second gas generation unit (2b) is required.

3. Method according to Claim 1, **characterized in that** the gas generation units (2a, 2b) are indirectly heated and are suitable for endothermic steam reforming, the first gas generation unit (2a), during the starting phase, being operated at a temperature T_{start_1} > T_{rated_1} and being applied with at most a quantity of operating medium which corresponds to the instantaneously required power, and **in that** after the end of the starting phase the gas generation units (2a, 2b) are operated at predetermined operating temperatures (T_{rated_1}, T_{rated_2}).

4. Method according to Claim 1, **characterized in that** at least the first gas generation unit (2a), during the starting phase, in addition to the operating medium is also supplied with an oxygen-containing medium, at least the first gas generation unit (2a) being suitable for partial oxidation or for autothermal operation, and during the starting phase at most a quantity of operating medium or quantity of oxygen-containing medium which corresponds to the power P_{start_1} being supplied.

5. Method according to Claim 3, **characterized in that** the first gas generation unit (2a), after the end of the starting phase, is supplied with no oxygen-containing medium or only a quantity of oxygen-containing medium which is reduced compared to the maximum quantity reached during the starting phase.

6. Method according to Claim 4, **characterized in that** the first gas generation unit (2a), after the end of the starting phase, in the event of a predetermined load rise, is supplied with oxygen-containing medium for a predetermined time.

7. Method according to Claims 2 and 4,
**characterized in that** the first gas generation unit (2a), after the end of the starting phase, is supplied with oxygen-containing medium when a power which exceeds the rated power P_{rated_2} of the second gas generation unit (2b) is required.

8. Method according to Claim 1, **characterized in that** means for keeping the first gas generation unit (2a) warm are provided.

9. Method according to Claim 1, **characterized in that** the starting phase has ended as soon as the components of the fuel cell system (1) through which the product gas stream of the first gas generation unit (2a) flows have reached their predetermined operating temperature.

## Revendications

1. Procédé de conduite d'une unité de génération de gaz pour une pile à combustible dans un système de pile à combustible (1) avec au moins deux unités de génération de gaz (2a, 2b) traversées en série par un courant d'éduit avec une première et une deuxième puissances nominales (P_{nom_1}, P_{nom_2}) et une première et une deuxième températures de fonctionnement (T_{nom_1}, T_{nom_2}), dans lequel la première unité de génération de gaz (2a) présente une plus petite masse thermique que la deuxième unité de génération de gaz (2b), **caractérisé en ce que** seule la première unité de génération de gaz (2a) fonctionne pendant une phase de démarrage, pendant laquelle la première unité de génération de gaz (2a) fonctionne avec une puissance P_{dém_1} > P_{nom_1} et/ou avec une température de fonctionnement T_{dém_1} > T_{nom_1}, et au moins la deuxième unité de génération de gaz (2b) fonctionne après la fin de la phase de démarrage.

2. Procédé selon la revendication 1, **caractérisé en ce qu'**après la fin de la phase de démarrage, pour une charge faible ou moyenne, seule la deuxième unité de génération de gaz (2b) fonctionne et **en ce que** la première unité de génération de gaz (2a) ne fonctionne alors en plus que si une puissance dépassant la puissance nominale P_{nom_2} de la deuxième unité de génération de gaz (2b) est nécessaire.

3. Procédé selon la revendication 1, **caractérisé en ce que** les unités de génération de gaz (2a, 2b) sont chauffées indirectement et conviennent pour un reformage endothermique à la vapeur d'eau, dans lequel la première unité de génération de gaz (2a) fonctionne avec une température T_{dém_1} > T_{nom_1} pendant la phase de démarrage et on ajoute au maximum une quantité de combustible correspondant à la puissance instantanée demandée, et **en ce que** les unités de génération de gaz (2a, 2b) fonctionnent à des températures de fonctionnement prédéterminées (T_{nom_1}, T_{nom_2}) après la fin de la phase de démarrage.

4. Procédé selon la revendication 1, **caractérisé en ce que** l'on ajoute aussi au moins à la première unité de génération de gaz (2a), pendant la phase de démarrage, un fluide contenant de l'oxygène en plus du combustible, dans lequel au moins la première unité de génération de gaz (2a) convient pour l'oxydation partielle ou pour un mode de fonctionnement autothermique, et dans lequel on ajoute, pendant la phase de démarrage, au maximum une quantité de combustible, respectivement une quantité de fluide contenant de l'oxygène, correspondant à la puissance P_{dém_1}.

5. Procédé selon la revendication 3, **caractérisé en ce qu'**après la fin de la phase de démarrage, on n'ajoute à la première unité de génération de gaz (2a) pas de fluide contenant de l'oxygène, ou seulement une quantité de fluide contenant de l'oxygène qui est réduite par rapport à la quantité atteinte au maximum pendant la phase de démarrage.

6. Procédé selon la revendication 4, **caractérisé en ce que** l'on ajoute à la première unité de génération de gaz (2a) après la fin de la phase de démarrage, du fluide contenant de l'oxygène pendant une durée prédéterminée pour un saut de charge prédéterminé.

7. Procédé selon la revendication 2 et 4, **caractérisé en ce que** l'on ajoute du fluide contenant de l'oxygène à la première unité de génération de gaz (2a), après la fin de la phase de démarrage, lorsque l'on demande une puissance qui dépasse la puissance nominale P_{nom_2} de la deuxième unité de génération de gaz (2b).

8. Procédé selon la revendication 1, **caractérisé en ce qu'**il est prévu des moyens pour garder chaude la première unité de génération de gaz (2a).

9. Procédé selon la revendication 1, **caractérisé en ce que** la phase de démarrage est terminée, dès que les composants du système de pile à combustible (1) traversés par le courant de produits gazeux de la première unité de génération de gaz (2a) ont atteint leur température de fonctionnement prédéterminée.
